Europäisches Patentamt

European Patent Office

Office européen des brevets

(11) Veröffentlichungsnummer: **0 457 970 A1**

## (12) EUROPÄISCHE PATENTANMELDUNG

(21) Anmeldenummer: 90125548.9

(22) Anmeldetag: 27.12.90

(51) Int. Cl.5: **A47J 39/00**, A47J 27/16, B05B 7/24, B05B 7/00

(30) Priorität: 27.04.90 DE 4013595

(43) Veröffentlichungstag der Anmeldung:
27.11.91 Patentblatt 91/48

(84) Benannte Vertragsstaaten:
CH DE FR IT LI

(71) Anmelder: ELOMA GmbH BEDARFSARTIKEL ZUR GEMEINSCHAFTSVERPFLEGUNG
Otto-Hahn-Strasse 10
W-8031 Maisach(DE)

(72) Erfinder: Spann, Gustav
Heinrich-Feller-Strasse 12
W-8080 Emmering(DE)

(74) Vertreter: Bohnenberger, Johannes, Dr. et al
Meissner, Bolte & Partner
Widenmayerstrasse 48 Postfach 86 06 24
W-8000 München 86(DE)

(54) Dampf-Gargerät.

(57) Es sind Dampf-Gargeräte zum Garen von Nahrungsmitteln in einem geschlossenen Garraum bekannt, bei denen eine Wasserzuführungsleitung (13) vorgesehen ist, deren Austrittsöffnung über der Nabe eines Gebläserades (8) mündet. Bei Drehung des Gebläserades wird auf die Nabe (14) tropfendes Wasser nach außen geschleudert und in Richtung auf eine, das Gebläserad umgebende Heizung (10) geführt. Es wird vorgeschlagen, die Austrittsöffnung in Luft-Ströbmungsrichtung gesehen im wesentlichen direkt vor den Schaufeln des Schaufelrades anzuordnen und Wasserleiteinrichtungen vorzusehen, die derart angeordnet sind, daß aus der Austrittsöffnung austretendes Wasser im wesentlichen gleichmäßig auf die Schaufeln verteilbar ist.

Fig. 1

Die Erfindung betrifft ein Dampf-Gargerät nach dem Oberbegriff des Patentanspruches 1.

Aus der DE 37 00 894 A1 ist ein derartiges Dampf-Gargerät bekannt. Bei diesem bekannten Dampf-Gargerät strömt das zu vernebelnde und vom Gebläserad nach außen in Richtung auf die Heizung zu fördernde Wasser radial von oben im wesentlichen drucklos auf die Nabe des Laufrades. Die Nabe des Laufrades nimmt das Wasser zumindest teilweise um ihren Umfang mit, wobei sich Wassertröpfchen lösen und radial nach außen in Richtung auf die Gebläseschaufeln fliegen. Dort werden sie weiter zerstäubt und zusammen mit dem Luftstrom radial nach außen weiterbefördert. Bei dieser bekannten Anordnung kann nun eine gewisse Ungleichmäßigkeit der Wasservernebelung festgestellt werden.

Der Erfindung liegt die Aufgabe zugrunde, ein Dampf-Gargerät der eingangs genannten Art dahingehend weiterzubilden, daß mit einfachen Mitteln eine besonders gleichmäßige Wasservernebelung erzielbar ist.

Diese Aufgabe wird durch die im Kennzeichen des Patentanspruches 1 angegebenen Merkmale gelöst.

Ein wesentlicher Punkt der Erfindung liegt darin, daß das Wasser nicht auf die Nabe, sondern im wesentlichen direkt auf die Schaufeln geführt wird, wobei zusätzliche Wasserleiteinrichtungen vorgesehen sind, um das Wasser im wesentlichen gleichmäßig über die Schaufeln zu verteilen. Dies kann dadurch geschehen, daß das Wasser zunächst in Auffangeinrichtungen läuft, über welche das Wasser um den Schaufelradumfang verteilt wird. Derartige Auffangeinrichtungen können beispielsweise eine ringförmige, zum Schaufelkranz konzentrische Rinne umfassen, die radial nach innen offen ist. Läßt man Wasser in diese Rinne laufen, so wird es bei hinreichend schneller Drehung des Schaufelrades (und diese ist im allgemeinen gewährleistet) mitgenommen, so daß eine ringsum gefüllte Rinne vorliegt. Diese Rinne (oder andere Auffangeinrichtungen) kann nun mit Öffnungen versehen sein, welche den Schaufeln zugeordnet sind. Dadurch kann Wasser aus der Rinne gezielt auf die Schaufeln fließen, so daß keine größeren Wassertropfen zwischen den Schaufeln hindurch vom Luftstrom mitgenommen werden. In diesem Fall sind die Öffnungen vorzugsweise so ausgebildet, daß ihr durchströmbarer Querschnitt mit zunehmendem Wasserpegel in der Rinne steigt. Dadurch kann gewährleistet werden, daß die Rinne nicht überläuft und eine gleichmäßige Wasserverteilung auf die Schaufeln stattfindet.

Auf den Schaufeln sind vorzugsweise ebenfalls Leiteinrichtungen vorgesehen, welche das zugeführte Wasser gleichmäßig über die Schaufeln, und zwar in deren Tiefe bzw. in axialer Richtung, verteilen. Diese Leiteinrichtungen können z.B. Einprägungen in dem Blech der Schaufeln sein. Es ist auch möglich, die Schaufeln mit einem Sieb- oder Netzbelag zu versehen, der die Verteilung des Wassers sicherstellt.

Weitere, als wesentlich betrachtete Merkmale ergeben sich aus den Unteransprüchen und aus der nachfolgenden Beschreibung bevorzugter Ausführungsformen der Erfindung, die anhand von Abbildungen näher erläutert werden. Hierbei zeigen

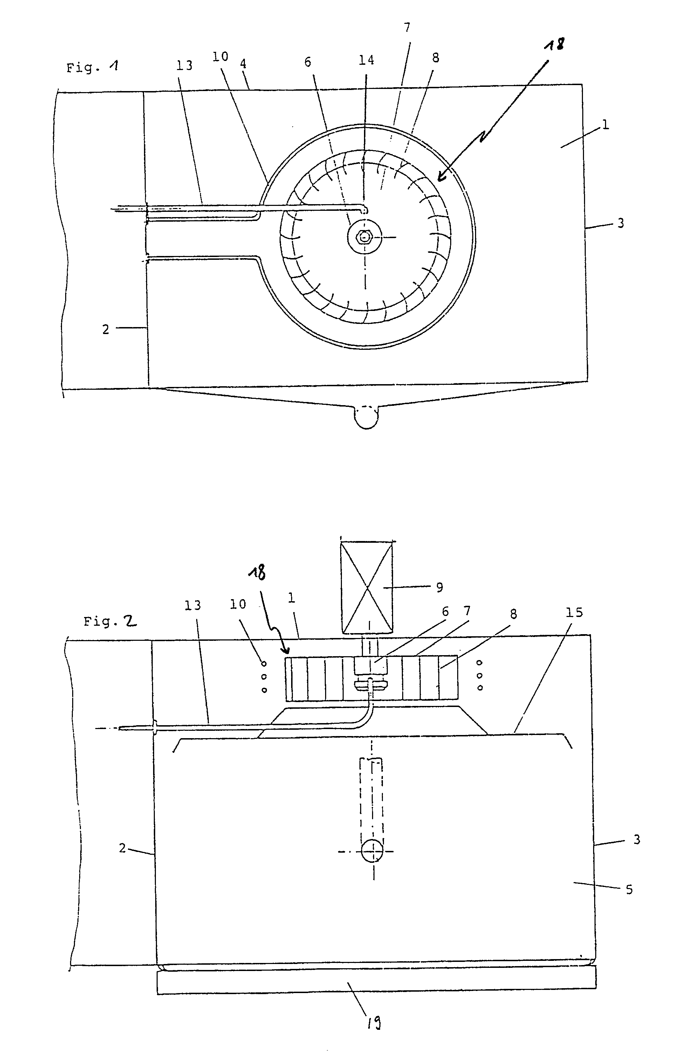

Fig. 1 und 2     schematisierte Längs- und Querschnitte durch ein bekanntes Dampf-Gargerät,

Fig. 3     eine Teil-Draufsicht auf eine erste Ausführungsform der Erfindung,

Fig. 4     einen Schnitt entlang der Linie IV-IV aus Fig. 3,

Fig. 5     einen Teil-Schnitt durch eine Rinne mit Ausströmöffnung und zugeordneter Schaufel,

Fig. 6     eine Ansicht entlang der Linie VI-VI aus Fig. 5,

Fig. 7     eine weitere bevorzugte Ausführungsform der Erfindung im Teil-Querschnitt,

Fig. 8     eine schematisierte Ansicht entlang der Linie VIII-VIII aus Fig. 7,

Fig. 9     eine weitere Ausführungsform der Erfindung im Teil-Längsschnitt, und

Fig. 10     eine schematisierte Ansicht entlang der Linie X-X aus Fig. 9.

Bein bekannten Dampf-Gargerät wird ein Innenraum durch eine Rückwand 1, Seitenwände 2 und 3, eine Decke 4, einen Boden 5 und eine Tür 19 definiert. An der Rückwand 1 ist ein Schaufelrad 18 gelagert, das eine Nabe 6, eine Scheibe 7 und am Umfang Schaufeln 8 aufweist. Zum Antrieb des Schaufelrads ist ein Elektromotor 9 vorgesehen, der außerhalb des Gehäuses angeordnet ist. Das Schaufelrad ist von einer Heizung 10 umgeben. Durch die Seitenwand 2 läuft eine Wasserzuführungsleitung 13, die mit einer Wasserzuführung in Verbindung steht. Eine Mündung 14 der Wasserzuführungsleitung liegt bei dem bekannten Gerät über der Nabe 6.

Bei der nachfolgenden Beschreibung der Ausführungsbeispiele der Erfindung sind die beschriebenen Teile bis auf die konkrete Ausbildung des Gebläse-Schaufelrads 18 und die Anordnung der Wasserzuführungsleitung 13 bzw. deren Austrittsöffnung 14 als ebenfalls gegeben anzusehen.

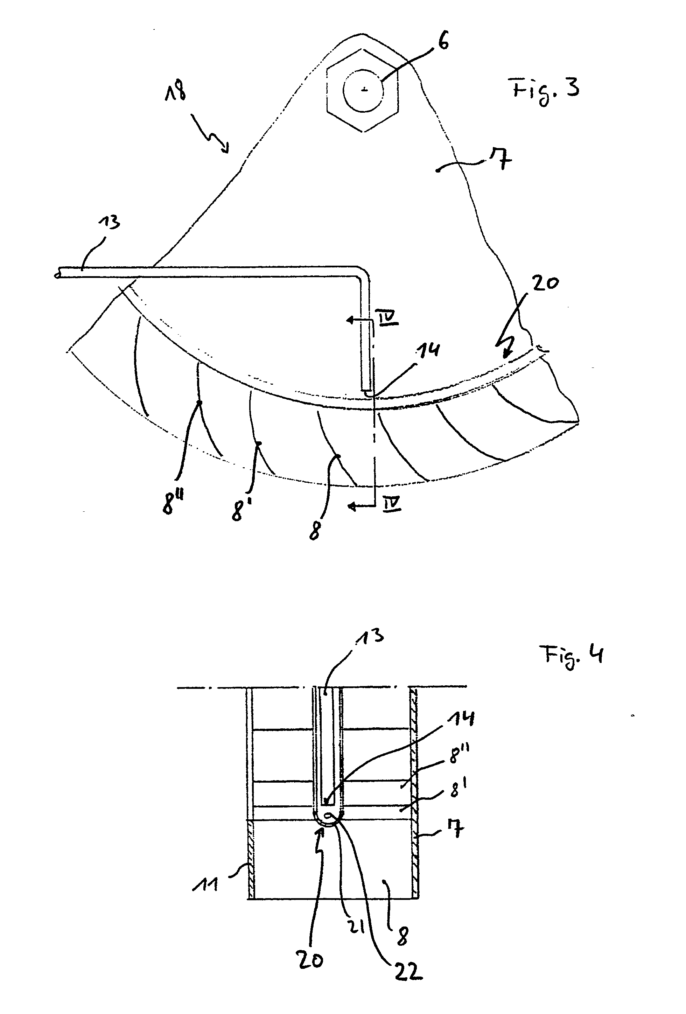

Bei der in den Fig. 3 und 4 gezeigten Ausführungsform der Erfindung ist eine ringförmige Rinne 22 im wesentlichen in der (axial gesehen) Mitte der Schaufeln 8 an deren (radial gesehen) Innenrändern angebracht. Die Rinne 21 ist nach innen in Richtung auf die Nabe 6 offen. Die Mündung 14 der Wasserzuführungsleitung 13 liegt im wesentlichen direkt über der Rinne 21 bzw. innerhalb dieser Rinne, so daß ausströmendes Wasser in jedem Fall nur in die Rinne fließen kann.

Die Rinne 21 weist im Bereich der Schaufeln 8 Öffnungen 22 auf, durch welche zugeführtes Wasser austreten und auf die Schaufeln 8 gelangen kann. Aufgrund der Schleuderwirkung und der mitströmenden Luft wird das aus den Öffnungen 21 strömende Wasser radial nach außen mitgenommen und verteilt sich dabei in axialer Richtung auf den Schaufeln 8, so daß am radial äußeren Ende der Schaufeln 8 lediglich noch ein dünner Wasserfilm vorliegt, der sich in feinen Tröpfchen ablösen kann und als Wassernebel zusammen mit dem Luftstrom zur Heizung 10 befördert wird. Somit bildet bei dieser Ausführungsform die Rinne 21 mit den Ausströmöffnungen 22 Wasserleiteinrichtungen 20.

Bei einer anderen, in den Abbildungen nicht gesondert gezeigten Ausführungsform der Erfindung weist die Rinne 21 anstelle (oder zusätzlich zu) Bohrungen 22 im wesentlichen V-förmige Kerben an ihrem Oberrand auf. Durch diese Kerben kann Wasser aus der Rinne ebenfalls auf die Schaufeln 8 gelangen. Diese Kerben haben darüber hinaus den Vorteil, daß, unabhängig von der zugeführten Wassermenge pro Zeiteinheit, eine gleichmäßige Verteilung des Wassers rings um den Umfang des Schaufelrades gewährleistet ist. Darüber hinaus ergibt sich eine verbreiterte Verteilung des Wassers in axialer Richtung, da zwei in axialer Richtung voneinander beabstandete Ausströmöffnungen (nämlich die Kerben) vorliegen.

Die in den Abbildungen mit der Bezugsziffer 11 bezeichnete Ringscheibe verbindet die Schaufeln 8 an ihrem, der Scheibe 7 gegenüberliegenden Ende, um zum einen die Luftförderwirkung, zum anderen die Stabilität der Anordnung zu erhöhen.

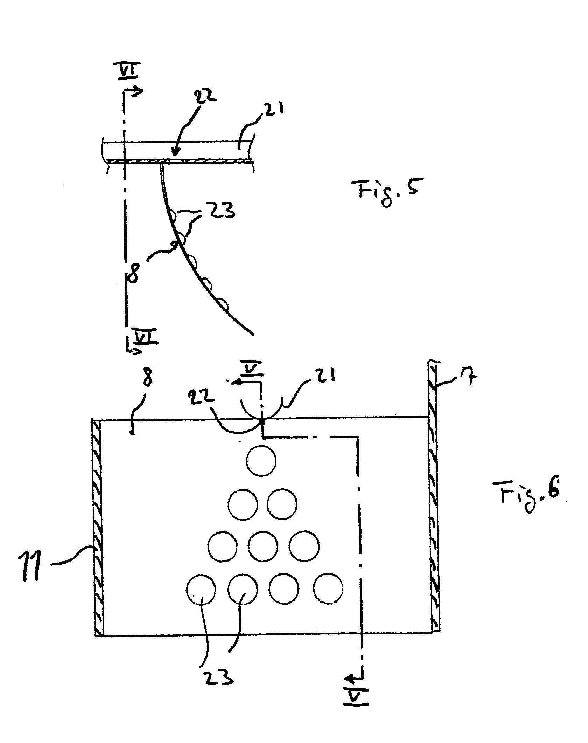

Bei der in den Fig. 5 und 6 gezeigten Variante der Ausführungsform nach den Fig. 3 und 4 sind auf den Schaufeln 8 zusätzliche Leit-Prägungen 23 vorgesehen, die so angeordnet sind, daß aus einer Öffnung 21 strömendes Wasser über einen weiteren Axial-Bereich der Schaufeln 8 verteilt wird.

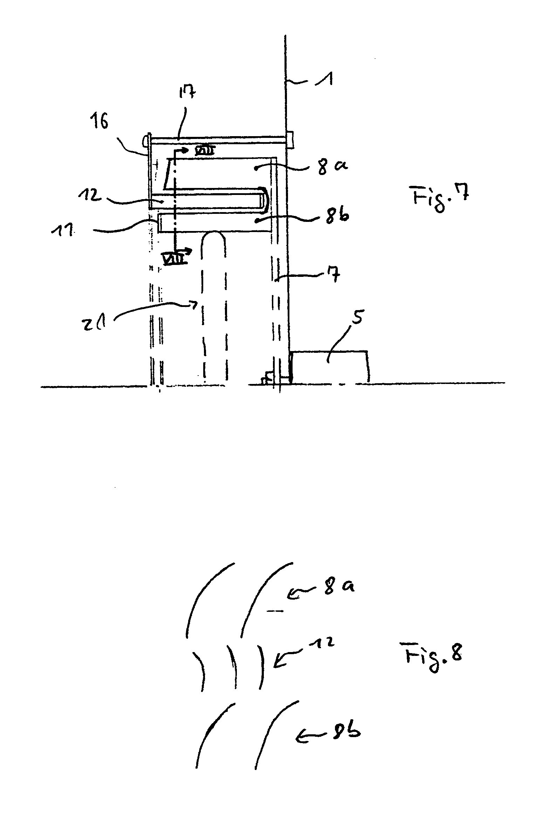

Bei der in den Fig. 7 und 8 gezeigten weiteren Ausführungsformen der Erfindung, deren Merkmale in Kombination mit allen übrigen Einzelmerkmalen verwendbar sind, werden zwei zueinander konzentrische Schaufelkränze 8a und 8b an der Scheibe 7 befestigt. Die Schaufelkränze 8a und 8b sind voneinander beabstandet, so daß zwischen ihnen ein Spalt liegt. In diesen Spalt ragt ein Kranz von Prallschaufeln 12, die an einem Montagering 16 befestigt sind. Der Montagering 16 ist über Bolzen 17 an der Rückwand 1 gehalten. Wenn bei dieser Ausführungsform Wasser auf die Schaufeln 8b strömt, so ergibt sich auch hier wieder ein Wasserfilm, der radial nach außen fließt und am radial äußeren Rand der Schaufeln 8b abreißt. Die abgerissenen Tröpfchen fliegen aufgrund ihrer kinetischen Energie und, zusätzlich gefördert vom Luftstrom, in Richtung auf die Prallschaufeln 12.

Dort ergibt sich eine weitere Verteilung bzw. Verkleinerung der Wassertröpfchen, die dann wieder auf die radial äußeren Schaufeln 8a gelangen. Durch die Relativgeschwindigkeit zwischen den abgebremsten Tröpfchen und den Schaufeln 8a ergibt sich nochmals eine Zersprühung der Tröpfchen, so daß diese als besonders feiner Nebel radial nach außen förderbar sind.

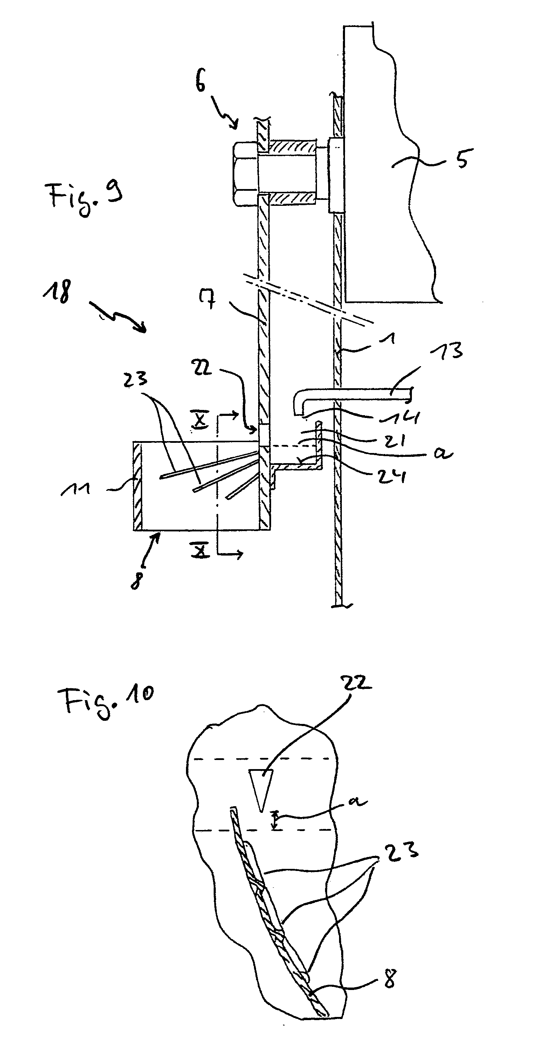

Bei der in den Fig. 9 und 10 gezeigten bevorzugten Ausführungsform ist die Rinne 21 nicht am Innenrand der Schaufeln 8, sondern an der Rückseite der Scheibe 7 angebracht. Die Wasserzuführungsleitung 13 führt somit durch die Rückwand 1 des Gehäuses.

In der Scheibe 7 sind Öffnungen 22 so angebracht, daß sie (in Radialrichtung gesehen) oberhalb des Bodens 24 der Rinne 21 liegen. Dadurch kann sich in der Rinne 21 ein Wasserpegel a ausbilden.

Die Öffnugen 22 sind V-förmig, wobei das spitze Ende radial nach außen zeigt. Je höher der Pegel a des Wassers in der Rinne 21 steigt, desto mehr Wasser kann durch die Öffnungen 22 ausströmen.

Auf den Schaufeln 8 sind wiederum Leitprägungen 23 vorgesehen (in diesem Fall durchgehende Rippen), welche eine Verteilung des durch die Öffnungen 22 auf die Schaufeln 8 gelangenden Wassers in axialer Richtung der Schaufeln sicherstellen.

Bezugszeichenliste

| | |
|---|---|
| 1 | Rückwand |
| 2 | Seitenwand |
| 3 | Seitenwand |
| 4 | Decke |
| 5 | Boden |
| 6 | Nabe |
| 7 | Scheibe |
| 8 | Schaufel |
| 9 | Elektromotor |
| 10 | Heizung |
| 11 | Rinne |
| 12 | Prallschaufel |
| 13 | Wasserzuführungsleitung |
| 14 | Austrittsöffnung |
| 15 | Abdeckung |
| 16 | Montagering |
| 17 | Montagebolzen |
| 18 | Schaufelrad |

| 19 | Tür |
| 20 | Wasserleiteinrichtung |
| 21 | Rinne |
| 22 | Öffnung |
| 23 | Leitprägung |
| 24 | Rinnenboden |
| a | Wasserspiegel |

**Patentansprüche**

1. Dampf-Gargerät zum Garen von Nahrungsmitteln in einem geschlossenen Garraum mit mindestens einer Wasserzuführungsleitung (13), mit mindestens einer Austrittsöffnung (14), mit einer Heizung (10) und mit mindestens einem Gebläse-Schaufelrad (18) mit mindestens einem von Luft durchströmbaren Umfangskranz von Schaufeln (8), **dadurch gekennzeichnet,** daß die Austrittsöffnung (14) in Luft-Strömungsrichtung im wesentlichen direkt vor den Schaufeln (8) angeordnet ist, und daß Wasserleiteinrichtungen (20) vorgesehen und derart angeordnet sind, daß aus der Austrittsöffnung (14) austretendes Wasser im wesentlichen gleichmäßig auf die Schaufeln (8) verteilbar ist.

2. Dampf-Gargerät nach Anspruch 1, dadurch gekennzeichnet, daß die Wasserleiteinrichtungen (20) im wesentlichen gleichmäßig um den Schaufelradumfang angeordnete Wasserauffangeinrichtungen (21) aufweisen.

3. Dampf-Gargerät nach Anspruch 2, dadurch gekennzeichnet, daß die Wasserauffangeinrichtungen (21) derart ausgebildet sind, daß in ihnen Wasser beim Drehen des Schaufelrades (18) in Drehrichtung förderbar ist.

4. Dampf-Gargerät nach einem der Ansprüche 2 oder 3, dadurch gekennzeichnet, daß die Wasserauffangeinrichtungen mindestens eine mit dem Schaufelrad (18) umlaufende Rinne (21) umfassen, die radial nach innen offen ist.

5. Dampf-Gargerät nach einem der Ansprüche 2 bis 4, dadurch gekennzeichnet, daß die Auffangeinrichtungen (21) Öffnungen (22) aufweisen, welche Schaufeln (8) zugeordnet sind, und durch welche Wasser aus den Auffangeinrichtungen (21) gezielt auf die Schaufeln (8) leitbar ist.

6. Dampf-Gargerät nach Anspruch 5, dadurch gekennzeichnet, daß die Öffnungen (22) derart ausgebildet sind, daß ihr durchströmbarer Querschnitt mit zunehmendem Wasserpegel (a) in den Auffangeinrichtungen (21) steigt.

7. Dampf-Gargerät nach einem der vorhergehenden Ansprüche, dadurch gekennzeichnet, daß die Wasserleiteinrichtungen (20) den Schaufeln (8) zugeordnete Leiteinrichtungen (23) umfassen, die derart ausgebildet sind, daß auf die Schaufeln (8) gelangendes Wasser in axialer Richtung über die Tiefe der Schaufeln (8) im wesentlichen gleichmäßig verteilt wird.

8. Dampf-Gargerät nach Anspruch 7, dadurch gekennzeichnet, daß die Leiteinrichtungen (23) in die Schaufeln (8) eingeprägte Erhebungen und/oder Vertiefungen umfassen.

9. Dampf-Gargerät nach einem der vorhergehenden Ansprüche, dadurch gekennzeichnet, daß die Wasserleiteinrichtungen (21) Prallschaufeln (12) umfassen, die derart ausgebildet und in Beziehung zu den Schaufeln (8b) des Schaufelrades (18) angeordnet sind, daß von den Schaufeln (8b) fortströmende Wassertropfen auf die Prallschaufeln (12) gelangen und verteilt bzw. zerstäubt werden.

10. Dampf-Gargerät nach Anspruch 9, dadurch gekennzeichnet, daß das Schaufelrad (18) mindestens zwei konzentrische Schaufelkränze (8a, 8b) umfaßt, zwischen denen die Prallschaufeln (11) feststehend angeordnet sind.

Fig. 1

Fig. 2

Fig. 3

Fig. 4

Fig. 5

Fig. 6.

Fig. 7

Fig. 8

Fig. 9

Fig. 10

**Europäisches Patentamt**

## EUROPÄISCHER RECHERCHENBERICHT

Nummer der Anmeldung

**EP 90 12 5548**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 244 538 (LINCOLN FOODSERVICE PRODUCT INC) <br> * Spalte 5, Zeile 36 - Spalte 7, Zeile 33; Abbildungen 4-6 ** | 1 | A 47 J 39/00 <br> A 47 J 27/16 <br> B 05 B 7/24 |
| A | | 3,4 | B 05 B 7/00 |
| | – – – | | |
| D,A | DE-A-3 700 894 (ELOMA GMBH BEDARFSARTIKEL ZUR GEMEINSCHAFTSVERPLEGUNG) <br> * Spalte 2, Zeile 39 - Spalte 3, Zeile 28; Abbildungen 1,2 ** | 1 | |
| | – – – | | |
| A | CH-A-6 302 40 (ELECTROLUX BETRIEBSVERWALTUNG AG) <br> * Seite 3, Spalte 2, Zeile 8 - Zeile 49; Abbildungen 2,5-7 ** | 1 | |
| | – – – – – | | |

| RECHERCHIERTE SACHGEBIETE (Int. Cl.5) |
|---|
| A 47 J <br> B 05 B <br> F 24 C |

Der vorliegende Recherchenbericht wurde für alle Patentansprüche erstellt

| Recherchenort | Abschlußdatum der Recherche | Prüfer |
|---|---|---|
| Den Haag | 22 August 91 | BODART P.A. |